(19) Europäisches Patentamt
European Patent Office
Office européen des brevets

(11) EP 4 741 445 A1

(12) **EUROPEAN PATENT APPLICATION**
published in accordance with Art. 153(4) EPC

(43) Date of publication:
**13.05.2026 Bulletin 2026/20**

(21) Application number: **24836101.6**

(22) Date of filing: **04.07.2024**

(51) International Patent Classification (IPC):
***C08J 3/075*** (2006.01) ***A61L 27/16*** (2006.01)
***A61L 27/52*** (2006.01) ***C08F 290/06*** (2006.01)
***G02C 7/04*** (2006.01)

(52) Cooperative Patent Classification (CPC):
**A61L 27/16; A61L 27/52; C08F 290/06; C08J 3/075; G02C 7/04**

(86) International application number:
**PCT/JP2024/024223**

(87) International publication number:
**WO 2025/009589 (09.01.2025 Gazette 2025/02)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **04.07.2023 JP 2023110075**
**26.03.2024 JP 2024050042**

(71) Applicant: **Mitsubishi Chemical Corporation**
**Tokyo 100-8251 (JP)**

(72) Inventors:
- **MISHIMA, Shiori**
**Tokyo 100-8251 (JP)**
- **TSURUOKA, Taiki**
**Tokyo 100-8251 (JP)**
- **TABATA, Daiki**
**Tokyo 100-8251 (JP)**

(74) Representative: **Ter Meer Steinmeister & Partner Patentanwälte mbB**
**Nymphenburger Straße 4**
**80335 München (DE)**

# (54) SILICONE HYDROGEL, CONTACT LENS, METHOD FOR PRODUCING SILICONE HYDROGEL, AND METHOD FOR PRODUCING CONTACT LENS

(57) Provided are a silicone hydrogel that has, even when being produced using a hydrophobic mold such as a polypropylene mold, excellent surface hydrophilicity that is stable for a long period of time without requiring a surface treatment such as a plasma treatment, and a method for producing the same. The silicone hydrogel according to one embodiment of the present invention contains water, and in a dried body produced by removing water from the silicone hydrogel, a ratio (A'/B') of an average value (A') of O/Si concentration ratios at a first measurement point to a third measurement point to an average value (B') of O/Si concentration ratios at a 14th measurement point to a 16th measurement point, which are separately defined, is 1.20 or more.

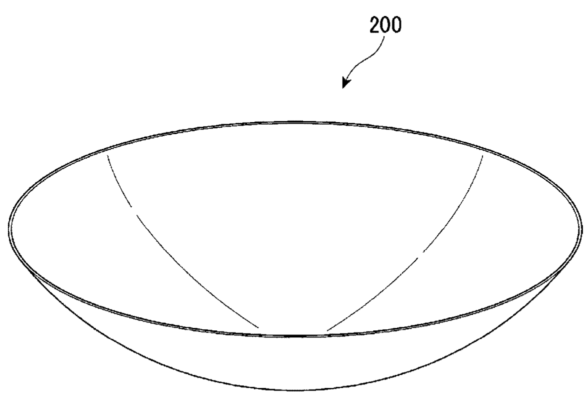


FIG. 2

EP 4 741 445 A1

## Description

### Technical Field

The present invention relates to a silicone hydrogel, a contact lens, a method for producing a silicone hydrogel, and a method for producing a contact lens.

The present application claims priority based on JP 2023-110075 filed in Japan on July 4, 2023 and JP 2024-050042 filed in Japan on March 26, 2024, the contents of which are incorporated herein by reference.

### Background Art

Silicone hydrogels are used as materials for contact lenses, intraocular lenses, and the like because of their high oxygen permeability.

In general, soft contact lenses are produced by a cast molding method. In this method, a polypropylene mold is often used. Since polypropylene is hydrophobic, the lens surface tends to be less hydrophilic due to polymerization of the silicone monomer in a state of being oriented on the mold surface.

A lens surface that is not sufficiently hydrophilic may be likely to cause adhesion of lipids and proteins thereto, and there is a concern that the lens may become cloudy, or eye diseases may be caused. In addition, such a lens surface may be likely to cause tear break-up, and may consequently cause discomfort such as dryness or friction of the eye, or a disease such as blepharitis.

As a technique for improving the surface hydrophilicity of such a contact lens containing a silicone hydrogel, PTL 1 proposes a method of vaporizing a hydrophilic monomer and then generating plasma to form a hydrophilic polymer film on the lens surface.

Further, PTL 2 proposes a method of impregnating a contact lens produced after molding with a preservative solution containing a surfactant and a hydrophilic polymer to make the surfactant adhere to the surface of the contact lens.

Further, PTL 3 proposes a method of improving hydrophilicity by adding a polymerizable amphiphilic substance and curing the resultant mixture to expose a hydrophilic group on the surface.

PTL 4 proposes a method of forming a stable hydrophilic surface of a contact lens by using a monomer that has a specific structure and strongly interacts with some surfactants.

### Citation List

#### Patent Literature

PTL 1: JP S58-216222 A

PTL 2: JP S61-069023 A

PTL 3: JP H06-503373 T

PTL 4: JP 2014-040598 A


### Summary of Invention

#### Technical Problem

However, unfortunately, the plasma treatment proposed in PTL 1 requires a very large-scale apparatus, and setting of conditions for forming a coating film is complicated.

In addition, in the method proposed in PTL 2, the water wettability and surface lubricity of the contact lens cannot be maintained for a long period of time.

Moreover, in the method proposed in PTL 3, the amphiphilic substance is copolymerized with other raw materials of the contact lens, affecting the moisture content and mechanical properties of the contact lens. Thus, the contact lens cannot retain suitable physical properties.

Furthermore, in the method proposed in PTL 4, the surface hydrophilicity of the contact lens is lowered due to the release of the surfactant by long-term storage, friction during wearing on the eye, or tear replacement.

Solution to Problem

As a result of intensive studies to solve the above-mentioned issues, the present inventors have found that the above-mentioned problems can be solved, for example, by the following, and have completed the present invention.

That is, the present invention has the following aspects.

[1] A silicone hydrogel containing water,
wherein

in a dried body produced by removing water from the silicone hydrogel, a ratio (A'/B') of an average value (A') of O/Si concentration ratios at a first measurement point to a third measurement point to an average value (B') of O/Si concentration ratios at a 14th measurement point to a 16th measurement point is 1.20 or more,
where
each of the O/Si concentration ratios is a ratio of a proportion (atm%) of oxygen atoms to a proportion (atm%) of silicon atoms, the ratio being calculated from the proportion of oxygen atoms and the proportion of silicon atoms, the proportion of oxygen atoms and the proportion of silicon atoms being obtained by depth profiling using X-ray photoelectron spectroscopy at a surface of the dried body, and in etching of the dried body in a thickness direction from an outermost surface of the dried body by irradiation with an Ar ion beam generated under conditions of an ionizing energy of 3000 eV, a total of 16 measurement points are set in such a manner that the first measurement point (etching time: 0 seconds, the outermost surface of the dried body), a second measurement point (etching time: 50 seconds), and so on are sequentially set at every 50 seconds to the 16th measurement point (etching time: 750 seconds), and at each of the total of 16 measurement points, the corresponding O/Si concentration ratio is determined.

[2] The silicone hydrogel according to [1], further containing a cured product of a curable composition,
wherein
the curable composition contains a silicone-based (meth)acrylate (A), a hydrophilic monomer (B), and a surfactant (C).
[3] The silicone hydrogel according to [2], wherein the hydrophilic monomer (B) includes a monomer having, in a molecule, at least one selected from the group consisting of a hydroxy group, an amino group, a carboxy group, a (meth)acryloyl group, an ionic group, an amide structure, and an alkyleneoxy structure.
[4] The silicone hydrogel according to [2] or [3], wherein the hydrophilic monomer (B) includes at least one selected from N-vinyl-2-pyrrolidone or N,N-dimethylacrylamide.
[5] The silicone hydrogel according to any one of [2] to [4], wherein the surfactant (C) includes a non-polymerizable surfactant.
[6] The silicone hydrogel according to any one of [2] to [4], wherein the surfactant (C) includes a sugar-based surfactant.
[7] The silicone hydrogel according to [6], wherein the sugar-based surfactant includes a sugar fatty acid ester.
[8] The silicone hydrogel according to any one of [1] to [7], wherein the silicone hydrogel has a monolayer structure in which differences in O/Si concentration ratio between adjacent measurement points among the first measurement point to the 16th measurement point are all 10 or less.
[9] A contact lens containing the silicone hydrogel described in any one of [1] to [8].
[10] A method for producing the silicone hydrogel described in [1], the method including (1), (2), and (4), and optionally (3):

(1): preparing a curable composition containing a silicone-based (meth)acrylate (A), a hydrophilic monomer (B), and at least one surfactant (C);
(2): molding the curable composition prepared in (1) using a hydrophobic mold to produce a cured product;
(3): swelling the cured product produced in (2) using water;
(4): washing the silicone hydrogel produced in (3).

[11] The production method according to [10], wherein the at least one surfactant (C) includes a non-polymerizable surfactant.
[12] The production method according to [10], wherein the at least one surfactant (C) includes a sugar-based surfactant.
[13] The production method according to [12], wherein the sugar-based surfactant includes a sugar fatty acid ester.
[14] The production method according to any one of [10] to [13], wherein the hydrophobic mold is a polyolefin mold.
[15] The production method according to any one of [10] to [14], wherein the silicone hydrogel is not subjected to a

plasma treatment.

[16] A method for producing a contact lens containing the silicone hydrogel described in [1], the method including producing the silicone hydrogel by the production method described in any one of [10] to [15].

Advantageous Effects of Invention

The silicone hydrogel of the present invention has excellent surface hydrophilicity and transparency, and is therefore particularly useful as an ophthalmic device such as a contact lens, an intraocular lens, or an artificial cornea.

The method for producing a silicone hydrogel of the present invention provides a silicone hydrogel that has, even when being produced using a hydrophobic mold such as a polypropylene mold, excellent surface hydrophilicity that is stable for a long period of time without requiring a surface treatment such as a plasma treatment.

Brief Description of Drawings

FIG. 1 is a schematic view illustrating an analysis method by X-ray photoelectron spectroscopy (XPS).

FIG. 2 is a perspective view illustrating an example of a contact lens containing a silicone hydrogel of the present invention.

FIG. 3 is a cross-sectional view illustrating an example of the contact lens containing the silicone hydrogel of the present invention.

Description of Embodiments

Hereinafter, embodiments of the present invention will be described in detail. The following embodiments are merely examples for the description of the present invention, and the present invention is not intended to be limited to the embodiments. The present invention can be implemented in various ways without departing from the spirit thereof.

In the present invention, "(meth)acrylate" is a generic term for acrylate and methacrylate.

Silicone Hydrogel

In an embodiment, a silicone hydrogel of the present invention contains water.

In the silicone hydrogel of the present embodiment, in a dried body produced by removing, from the silicone hydrogel, water contained in the silicone hydrogel, a ratio (A'/B') of an average value (A') of O/Si concentration ratios at a first measurement point to a third measurement point to an average value (B') of O/Si concentration ratios at a 14th measurement point to a 16th measurement point, which are described below, is 1.20 or more.

Here, each of the O/Si concentration ratios is a ratio of a proportion (atm%) of oxygen atoms to a proportion (atm%) of silicon atoms, the ratio being calculated from the proportion of oxygen atoms and the proportion of silicon atoms, the proportion of oxygen atoms and the proportion of silicon atoms being obtained by depth profiling using X-ray photoelectron spectroscopy at a surface of the dried body at a surface of the dried body. In etching of the dried body in a thickness direction from an outermost surface of the dried body by irradiation with an Ar ion beam generated under conditions of an ionizing energy of 3000 eV, a total of 16 measurement points are set in such a manner that the first measurement point (etching time: 0 seconds, the outermost surface of the cured product), a second measurement point (etching time: 50 seconds), and so on are sequentially set at every 50 seconds to the 16th measurement point (etching time: 750 seconds), and at each of the total of 16 measurement points, the corresponding O/Si concentration ratio is determined.

In the present invention, the "dried body" is produced by removing water from the silicone hydrogel. The silicone hydrogel may be a mixture of a cured product of a curable composition and at least water, and is typically a product produced by swelling the cured product of the curable composition with a solvent containing water, preferably water.

The removal of water from the silicone hydrogel may be performed according to a routine method so that the silicone hydrogel may have a moisture content of 3 mass% or less, preferably 2 mass% or less, more preferably 1 mass% or less, and still more preferably 0.1 mass% or less. For example, drying using a dryer or freeze-drying can be performed.

In another embodiment, the silicone hydrogel of the present invention contains water and a cured product of a curable composition. Specifically, the cured product of the curable composition is swollen with water.

In the silicone hydrogel of the present embodiment, in a dried body produced by removing, from the silicone hydrogel, water contained in the silicone hydrogel, the ratio (A'/B') of the average value (A') of O/Si concentration ratios at the first measurement point to the third measurement point to the average value (B') of O/Si concentration ratios at the 14th measurement point to the 16th measurement point, which are described above, may be 1.20 or more.

The ratio A'/B' between the concentration ratios is preferably 1.40 or more, and more preferably 1.60 or more. When the concentration ratio A'/B' between the concentration ratios is equal to or more than the lower limit, segregation of silicone to the surface is suppressed, and the silicone hydrogel is less likely to have a hydrophobic surface. The ratio A'/B' between the concentration ratios is preferably high. However, from the viewpoint of reducing the amount of the surfactant at the time of production, the ratio may be 3.00 or less, 2.80 or less, or 2.60 or less.
The ratio A'/B' between the concentration ratios can be adjusted, for example, by the type of the surfactant (C) described below, and the concentration of the surfactant (C) in the cured product composition.
The depth profiling of the silicone hydrogel using X-ray photoelectron spectroscopy can be performed by the following procedure.
FIG. 1 is a schematic view illustrating an analysis method by X-ray photoelectron spectroscopy (XPS).
In FIG. 1, reference sign 10 denotes an X-ray photoelectron spectrometer, reference sign 20 denotes a gas ion beam device, reference sign 30 denotes a sample stage, and reference sign 100 denotes a sample (silicone hydrogel).
For the sample to be used, the moisture on the surface of the silicone hydrogel is thoroughly wiped off, and the sample is thoroughly dried, for example, by freeze-drying.
As illustrated in FIG. 1, the analysis by the X-ray photoelectron spectroscopy (XPS) is performed by irradiating the sample 100 placed on an upper surface 30a of the sample stage 30 with X-rays from the X-ray photoelectron spectrometer 10. Analysis of the kinetic energy of photoelectrons excited by the photoelectric effect provides information such as the atom concentration and the bonding state of atoms near the surface of the sample 100. In addition, the XPS measurement with etching provides information on the atom concentration in the depth direction of the sample. In the present invention, the etching is performed by irradiating the sample with an Ar ion beam (Ar-IB) from an argon gas ion beam device. The irradiation is performed in a direction inclined by $\theta°$ ($0° < \theta < 90°$) with respect to the normal direction of the sample surface (see FIG. 1). The concentration distribution of each type of atoms represents the proportion of the corresponding atom when for each of carbon, oxygen, nitrogen, silicon, and fluorine, which are elements contained in the cured product, and sodium, chlorine, and phosphorus derived from a phosphate buffer solution, the number of atoms is measured, and the total of the measured numbers of atoms thereof is taken as 100 atm%.
The silicone hydrogel of the present invention preferably has a contact angle of 90° or less after washing with water at 90°C five times. The contact angle of the silicone hydrogel is preferably as low as possible, and may be 0°.
The contact angle of the silicone hydrogel means a contact angle between the silicone hydrogel and a water droplet.
The silicone hydrogel preferably has a total light transmittance of 90% or more, more preferably 92% or more, and still more preferably 93% or more. The total light transmittance is preferably as high as possible, and may be 100%.
The silicone hydrogel of the present invention preferably has a haze of 0.1 or more and 20 or less, more preferably 0.2 or more and 15 or less, and still more preferably 0.3 or more and 10 or less, as measured in accordance with JIS K 7136:2000 "Plastics - Determination of haze for transparent materials". When the haze is equal to or more than the lower limit, the silicone hydrogel is excellent in handling properties, and when the haze is equal to or less than the upper limit, the silicone hydrogel is excellent in transparency.
The silicone hydrogel of the present invention can be produced in a multilayer structure in which a plurality of phases having different constituent components are stacked on each other. Alternatively, the silicone hydrogel can also be produced in a monolayer structure in which the O/Si concentration ratio is continuously varied.
From the viewpoint of ease of production and production cost, it is preferable to produce the silicone hydrogel in a monolayer structure by continuously varying the O/Si concentration ratio.
Unlike the multilayer structure, the monolayer structure has no boundary between layers. Therefore, the monolayer structure does not have a portion where the constituent components are greatly varied due to the boundary between layers. That is, in the case of the monolayer structure, in the dried body produced by removing water from the silicone hydrogel, the differences in O/Si concentration ratio between adjacent measurement points among the first measurement point to the 16th measurement point are 10 or less, preferably 5 or less, and more preferably 3 or less for any combination of the measurement points.

## Curable Composition

In one embodiment, the curable composition of the present invention contains a silicone-based (meth)acrylate (A), a hydrophilic monomer (B), and a surfactant (C).
Hereinafter, each component that constitutes the curable composition will be described.

## Silicone-Based (Meth)Acrylate (A)

The silicone-based (meth)acrylate (A) used in the present invention contributes to, for example, the oxygen permeability, transparency, mechanical strength, and hydrophilicity of the silicone hydrogel.

The silicone-based (meth)acrylate (A) preferably has a siloxanyl group in the molecule.

The silicone-based (meth)acrylate (A) may be any of a monomer, a macromonomer, and a prepolymer.

Examples of the silicone-based (meth)acrylate (A) include

trimethylsiloxydimethylsilylmethyl (meth)acrylate, trimethylsiloxydimethylsilylpropyl (meth)acrylate, methylbis(trimethylsiloxy)silylpropyl (meth)acrylate,
tris(trimethylsiloxy)silylpropyl (meth)acrylate,
mono[methylbis(trimethylsiloxy)siloxy]bis(trimethylsiloxy)silylpropyl (meth)acrylate,
tris[methylbis(trimethylsiloxy)siloxy]silylpropyl (meth)acrylate,
methylbis(trimethylsiloxy)silylpropylglyceryl (meth)acrylate,
tris(trimethylsiloxy)silylpropylglyceryl (meth)acrylate,
mono[methylbis(trimethylsiloxy)siloxy]bis(trimethylsiloxy)silylpropylglyceryl (meth)acrylate,
trimethylsilylethyltetramethyldisiloxypropylglyceryl (meth)acrylate,
trimethylsiloxydimethylsilylpropylglyceryl (meth)acrylate,
methylbis(trimethylsiloxy)silylethyltetramethyldisiloxymethyl (meth)acrylate,
tetramethyltriisopropylcyclotetrasiloxanylpropyl (meth)acrylate, and
tetramethyltriisopropylcyclotetrasiloxybis(trimethylsiloxy)silylpropyl (meth)acrylate.

Further examples of the silicone-based (meth)acrylate (A) include a compound (A1) and a compound (A2) described below.

Compound (A1)

The compound (A1) is a silicone-based (meth)acrylate represented by the following formula (1).

[Chem. 1]

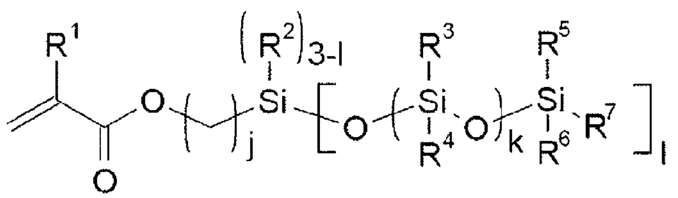
(1)

In the formula (1), $R^1$ represents a hydrogen atom or a methyl group. $R^2$ to $R^7$ each independently represent an optionally substituted alkyl group, alkoxy group, or alkoxyalkyl group. j is a natural number of from 1 to 10, k is a natural number of from 1 to 30, and l is a natural number of from 1 to 3. When 1 is 1, a plurality of $R^2$ may be the same or different, and when l is 2 or more, a plurality of siloxanyl groups enclosed in [ ] may be the same or different. When k is 2 or more, a plurality of groups represented by (-Si($R^3$)($R^4$)-O-) may be the same or different.

$R^1$ is preferably a methyl group because of ease of availability.

Examples of the alkyl group in $R^2$ to $R^7$ include a branched or linear alkyl group having from 1 to 22 carbon atoms, and specific examples thereof include a methyl group, an ethyl group, an n-propyl group, an i-propyl group, an n-butyl group, a t-butyl group, an i-butyl group, a pentyl group (amyl group), an i-pentyl group, a hexyl group, a heptyl group, a 2-ethylhexyl group, an octyl group, an i-octyl group, a nonyl group, an i-nonyl group, a decyl group, an i-decyl group, an undecyl group, a dodecyl group (lauryl group), a tridecyl group, a tetradecyl group, a pentadecyl group, a hexadecyl group, a heptadecyl group, an octadecyl group (stearyl group), an i-octadecyl group, a nonadecyl group, an icosyl group, and a docosyl group.

Examples of the alkoxy group in $R^2$ to $R^7$ include a branched or linear alkoxy group having from 1 to 22 carbon atoms, and specific examples thereof include a methoxy group, an ethoxy group, a propoxy group, and a butoxy group.

Examples of the alkoxyalkyl group in $R^2$ to $R^7$ include a branched or linear alkoxyalkyl group having from 1 to 22 carbon atoms, and specific examples thereof include a methoxymethyl group, a methoxyethyl group, a methoxypropyl group, a methoxybutyl group, an ethoxymethyl group, an ethoxyethyl group, an ethoxypropyl group, an ethoxybutyl group, a propoxymethyl group, a propoxyethyl group, a propoxypropyl group, a propoxybutyl group, a butoxymethyl group, a butoxyethyl group, a butoxypropyl group, and a butoxybutyl group.

Each of the alkyl group, the alkoxy group, and the alkoxyalkyl group in $R^2$ to $R^7$ may be substituted with at least one halogen. Examples of the halogen include fluorine, chlorine, bromine, and iodine.

$R^2$ is preferably an unsubstituted or substituted alkyl group, more preferably a methyl group, an ethyl group, an n-propyl group, an i-propyl group, an n-butyl group, a t-butyl group, or an i-butyl group, and still more preferably a methyl group.

$R^3$ to $R^7$ are each independently preferably an alkyl group or a halogenated alkyl group, and more preferably a methyl group, an ethyl group, an n-propyl group, an i-propyl group, an n-butyl group, a t-butyl group, an i-butyl group, a fluoromethyl group, a difluoromethyl group, a trifluoromethyl group, a 1-fluoroethyl group, a 2-fluoroethyl group, a 1,1-difluoroethyl group, a 1,2-difluoroethyl group, a 2,2-difluoroethyl group, a 2,2,2-trifluoroethyl group, a 3,3,3-trifluoropropyl group, or a 1-trifluoromethylethyl group.

Because the oxygen permeability of the silicone hydrogel is improved, at least one of $R^3$ to $R^7$ is preferably a halogenated alkyl group, and more preferably a fluorinated alkyl group.

j is a natural number of from 1 to 10, and is preferably from 1 to 5.

k is a natural number of from 1 to 30, and is preferably from 1 to 20. The compound (A1) may be a mixture of a plurality of compounds having different numbers for k.

1 is a natural number of from 1 to 3, and is preferably 1 or 2.

The compound (A1) is preferably at least one of the following compounds.

- ·A compound in which, in the formula (1), $R^1$ to $R^6$ are each a methyl group, $R^7$ is an n-butyl group, j is 3, and 1 is 1 ("Silaplane (trade name) FM-0711", "Silaplane (trade name) FM-0721", and "Silaplane (trade name) FM-0725" manufactured by JNC Corporation, and "MCR-M07" and "MCR-M11" manufactured by Gelest, Inc.)
- ·A compound in which, in the formula (1), $R^1$, $R^2$, $R^4$, and $R^6$ are each a methyl group, $R^3$ and $R^5$ are each a 3,3,3-trifluoropropyl group, $R^7$ is an n-butyl group, j is 3, and l is 1 ("MFR-M15" manufactured by Gelest, Inc.)
- ·A compound in which, in the formula (1), $R^1$ to $R^6$ are each a methyl group, $R^7$ is an n-butyl group, j is 3, and 1 is 2 ("MCS-M11" manufactured by Gelest, Inc.)
- ·A compound in which, in the formula (1), $R^1$ to $R^6$ are each a methyl group, $R^7$ is a methoxypropyl group, j is 3, and 1 is 2 ("MCS-MX11" manufactured by Gelest, Inc.)
- ·A compound in which, in the formula (1), $R^1$, $R^2$, $R^4$, and $R^6$ are each a methyl group, $R^3$ and $R^5$ are each a 3,3,3-trifluoropropyl group, $R^7$ is an n-butyl group, j is 3, and l is 2 ("MFS-M15" manufactured by Gelest, Inc.)

Compound (A2)

The compound (A2) is a silicone-based (meth)acrylate represented by the following formula (2).

[Chem. 2]

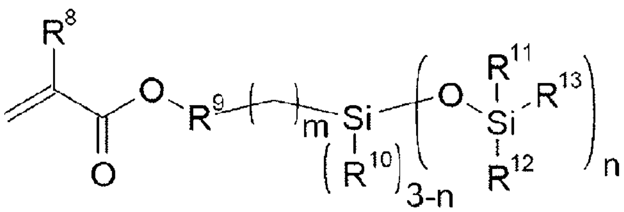

(2)

In the formula (2), $R^8$ represents a hydrogen atom or a methyl group. $R^9$ represents a single bond or an optionally substituted alkylene group, alkylene oxide group, polyalkylene oxide group, or alkylene-oxy-alkylene group.

$R^{10}$ to $R^{13}$ each independently represent an optionally substituted alkyl group, alkoxy group, or alkoxyalkyl group. m is a natural number of from 1 to 10, and n is a natural number of from 1 to 3. When n is 1, a plurality of $R^{10}$ may be the same or different. When n is 2 or more, a plurality of $-O-Si(R^{11})(R^{12})(R^{13})$ may be the same or different.

$R^8$ is preferably a methyl group because of its ease of availability.

The alkylene group, the alkylene oxide group, the polyalkylene oxide group, and the alkylene-oxy-alkylene group in $R^9$ are substituents that are divalent versions of the alkyl group, the alkoxy group, and the alkoxyalkyl group described for $R^2$ to $R^7$ in the above formula (1).

Because the surface hydrophilicity and transparency of the silicone hydrogel are improved, $R^9$ is preferably a single bond, or an unsubstituted or substituted alkylene oxide group or alkylene-oxy-alkylene group, and more preferably a single bond, or an unsubstituted or substituted alkylene oxide group.

The alkyl group, the alkoxy group, and the alkoxyalkyl group in $R^{10}$ to $R^{13}$ are the same as those described for $R^2$ to $R^7$ in the above formula (1). Each of the alkyl group, the alkoxy group, and the alkoxyalkyl group in $R^{10}$ to $R^{13}$ may be substituted with at least one halogen.

Each of $R^{10}$ to $R^{13}$ is preferably an unsubstituted or substituted alkyl group, more preferably a methyl group, an ethyl group, an n-propyl group, an i-propyl group, an n-butyl group, a t-butyl group, or an i-butyl group, and still more preferably a methyl group.

m is a natural number of from 1 to 10, and is preferably from 1 to 5.

n is a natural number of from 1 to 3, and because the surface hydrophilicity and transparency of the silicone hydrogel are improved, n is preferably 2 or 3.

The compound (A2) is preferably at least one of the following compounds.

·A compound in which, in the formula (2), $R^8$ is a methyl group, $R^9$ is a single bond, $R^{11}$ to $R^{13}$ are each a methyl group, m is 3, and n is 3 (TRIS, "SIM6487.6" manufactured by Gelest, Inc.)
·A compound in which, in the formula (2), $R^8$ is a methyl group, $R^9$ is $CH_2CH(OH)CH_2O$, $R^{10}$ to $R^{13}$ are each a methyl group, m is 3, and n is 2 (SIMMA, "SIM6481.15" manufactured by Gelest, Inc. and "BX-SiGMMA" manufactured by Bimax, Inc.)

For the silicone-based (meth)acrylate (A), a single type may be used alone or two or more types may be used in combination.

In particular, the compounds (A1) and (A2) are preferably used in combination because the surface hydrophilicity, transparency, and flexibility of the silicone hydrogel are improved.

In the case where the silicone-based (meth)acrylate (A) includes one or both of the compound (A1) and the compound (A2), the total content of the compound (A1) and the compound (A2) in the silicone-based (meth)acrylate (A) may be 50 mass% or more, 80 mass% or more, 90 mass% or more, or 100 mass%.

Hydrophilic Monomer (B)

The hydrophilic monomer (B) used in the present invention contributes to, for example, the hydrophilicity of the silicone hydrogel.

The hydrophilic monomer (B) preferably includes a monomer having, in a molecule, at least one selected from the group consisting of a hydroxy group, an amino group, a carboxy group, a (meth)acryloyl group, an ionic group, an amide structure, and an alkyleneoxy structure.

The hydrophilic monomer (B) may be a monomer, a macromonomer, or a prepolymer.

Examples of the hydrophilic monomer (B) include monomers having a hydroxy group, such as 2-hydroxyethyl (meth)acrylate, 2,3-dihydroxypropyl (meth)acrylate, 2-hydroxypropyl (meth)acrylate, 3-hydroxypropyl (meth)acrylate, 2-hydroxybutyl (meth)acrylate, 3-hydroxybutyl (meth)acrylate, and 4-hydroxybutyl (meth)acrylate;

monomers having an amino group, such as N,N-dimethylaminoethyl (meth)acrylate;
monomers having a carboxy group, such as (meth)acryloxyethyl succinate;
monomers having an ionic group, such as (3-(meth)acrylamidopropyl)trimethylammonium chloride, (meth)acryloxyethyldimethylbenzylammonium chloride, 3-((meth)acrylamido)propyldimethylbenzylammonium chloride, (meth) acryloylcholine chloride, and 2-(meth)acryloyloxyethylphosphorylcholine;
monomers having an amide structure, such as N-vinyl-2-pyrrolidone, N,N-dimethylacrylamide, N-hydroxymethyl (meth)acrylamide, N-(2-hydroxyethyl) (meth)acrylamide, N-vinylacetamide, N,N-dimethyl (meth)acrylamide, N,N-diethyl (meth)acrylamide, N-isopropyl (meth)acrylamide, 4-(meth)acryloylmorpholine, and (meth)acrylamide; and
monomers having an alkylene oxide structure, such as polyethylene glycol (meth)acrylate.

For the hydrophilic monomer (B), a single type may be used alone or two or more types may be used in combination.

The hydrophilic monomer (B) is preferably 2-hydroxyethyl (meth)acrylate because of improved hydrophilicity and ease of availability.

In another embodiment, because flexibility and mechanical strength can be imparted, the hydrophilic monomer (B) is preferably N-vinyl-2-pyrrolidone or N,N-dimethylacrylamide, or may be a mixture thereof.

In the case where the hydrophilic monomer (B) includes a monomer having, in a molecule, at least one selected from the group consisting of a hydroxy group, an amino group, a carboxy group, a (meth)acryloyl group, an ionic group, an amide structure, and an alkyleneoxy structure, the total content of the monomer having, in a molecule, at least one selected from the group consisting of a hydroxy group, an amino group, a carboxy group, a (meth)acryloyl group, an ionic group, an amide structure, and an alkyleneoxy structure in the hydrophilic monomer (B) may be 50 mass% or more, 80 mass% or more, 90 mass% or more, or 100 mass%.

In the case where the hydrophilic monomer (B) includes one, two, or three of N,N-dimethylacrylamide,

hydroxyethyl methacrylate, and N-vinyl-2-pyrrolidone, the total content of N,N-dimethylacrylamide, hydroxyethyl methacrylate, and N-vinyl-2-pyrrolidone in the hydrophilic monomer (B) may be 50 mass% or more, 80 mass% or more, 90 mass% or more, or 100 mass%.

Surfactant (C)

The surfactant (C) used in the present invention pseudo-hydrophilizes the hydrophobic mold used at the time of curing the curable composition to suppress the segregation of the silicone-based (meth)acrylate (A) having hydrophobicity to the surface of the cured product, and therefore the surfactant (C) has an effect of increasing the surface hydrophilicity of the silicone hydrogel.

Although the details are not clear, it is presumed that there is the following action. Specifically, the surfactant (C) added to the curable composition adsorbs to the surface of the mold, and the hydrophobic surface of the mold is covered with the surfactant. Since the surfactant adsorbs to the mold surface in such a manner that the hydrophobic portion of the surfactant is directed toward the mold surface, the mold surface is pseudo-hydrophilized. As a result, the curable composition comes to have a relatively high concentration of the hydrophilic monomer in the vicinity of the pseudo-hydrophilized mold surface. Polymerization of the curable composition in this state provides a cured product (three-dimensional crosslinked polymer) in which the concentration of the hydrophilic monomer unit is relatively higher in the vicinity of the surface than in the inside. A silicone hydrogel including a cured product produced by this method tends to exhibit stable surface hydrophilicity.

The surfactant (C) may be nonionic or ionic. From the viewpoints of surface hydrophilization performance and of elution during washing of the silicone hydrogel described below, the surfactant (C) preferably has an HLB value of from 3 to 19, more preferably from 5 to 18, and still more preferably from 10 to 17.

The surfactant (C) is preferably a polyoxyethylene group-containing surfactant, a sugar-based surfactant, or a biological material-derived surfactant.

The surfactant (C) preferably includes at least a non-polymerizable surfactant having no polymerizable structure in the structure thereof. In PTL 3, the amphiphilic substance is copolymerized with other raw materials of the contact lens, affecting the moisture content and mechanical properties of the contact lens. Thus, the contact lens cannot retain suitable physical properties. In contrast, the surfactant (C) includes a non-polymerizable surfactant, enabling the surfactant to be discharged to the outside of the contact lens by washing described below, and therefore, the influence on other components can be reduced.

The non-polymerizable surfactant is preferably a sugar-based surfactant or a biological material-derived surfactant (excluding a polymerizable surfactant), and more preferably a sugar-based surfactant.

In one embodiment, the surfactant (C) may include a non-polymerizable surfactant, or may include a non-polymerizable surfactant and a polymerizable surfactant. In another embodiment, the surfactant (C) may include a sugar-based surfactant, or may include a sugar-based surfactant and a polyoxyethylene group-containing surfactant.

Examples of the polyoxyethylene group-containing surfactant include polyoxyethylene hydrogenated castor oils, polyoxyethylene castor oils, polyoxyethylene glycerin fatty acid esters, and polyoxyethylene alkyl ethers such as polyoxyethylene lauryl ether; polyoxyethylene polyoxypropylene copolymers, polyoxyethylene polysiloxane ether block copolymers, polyoxyethylene polyoxypropylene ethylenediamines, polyoxyethylene polyoxypropylene alkyl ethers, polyoxyethylene sorbitan fatty acid esters (polysorbates) such as polyoxyethylene sorbitan monooleate (for example, polysorbate 80), polyoxyethylene sorbitol fatty acid esters, polyoxyethylene alkylphenyl ether, polyoxyethylene alkylphenyl ether formaldehyde condensates such as tyloxapol, polyoxyethylene sterol, polyoxyethylene hydrogenated sterol, polyoxyethylene fatty acid esters such as polyethylene glycol monostearate, polyoxyethylene lanolin alcohol, polyoxyethylene alkylamines, polyoxyethylene alkylamides, and polyoxyethylene alkyl ether phosphoric acid.

The sugar-based surfactant is a nonionic surfactant containing a sugar as a hydrophilic group.

Examples of the sugar-based surfactant include a sugar fatty acid ester formed by ester bonding of a sugar and a fatty acid, and an alkyl glycoside formed by glycoside bonding of a sugar and a higher alcohol, and the sugar-based surfactant is preferably a sugar fatty acid ester.

The fatty acid of the sugar fatty acid ester is preferably a saturated fatty acid.

Examples of the sugar fatty acid ester include sucrose fatty acid esters, sucrose benzoate, sucrose acetate, sorbitan fatty acid esters, and glucose esters, and the sugar fatty acid ester is preferably a sucrose fatty acid ester.

The number of carbon atoms of the constituent fatty acid of the sugar fatty acid ester is not particularly limited, but is preferably from 12 to 22, and more preferably from 12 to 18.

Examples of the saturated fatty acid having from 12 to 22 carbon atoms include lauric acid (12), myristic acid (14), pentadecylic acid (15), palmitic acid (16), margaric acid (17), and stearic acid (18).

Each of the numerical values in parentheses is the number of carbon atoms of the corresponding saturated fatty acid.

The range of the number of fatty acid ester groups of the sugar fatty acid ester varies depending on the number of

hydroxy groups capable of forming an ester bond in the molecular structure of the sugar serving as a hydrophilic group, and is, for example, from 1 to 8 in the case of a sucrose fatty acid ester, and from 2 to 4 in the case of a sorbitan fatty acid ester.

The HLB value of the sugar fatty acid ester can be adjusted by the number of fatty acid ester groups.

The biological material-derived surfactant is a surfactant produced by using, as a raw material, a biological material such as hyaluronic acid or a vitamin.

Examples of the biological material-derived surfactant include hyaluronic acid derivatives that are produced by imparting, via a glycerin skeleton, a hydrophobic group to some of hydrophilic groups of low molecular weight hyaluronic acid produced by hydrolyzing high molecular weight hyaluronic acid, such as hydrolyzed alkyl (from 12 to 13 carbon atoms) glyceryl hyaluronate; vitamin C derivatives such as L-ascorbyl palmitate, L-ascorbyl stearate, 2,6-dibutyryl-L-ascorbic acid, and 2-O-α-D-glucopyranosyl-L-ascorbic acid; and vitamin E derivatives such as DL-α-tocopherol acetate, DL-α-tocopheryl sodium phosphate, and D-α-tocopherol succinate.

For the surfactant (C), a single type may be used alone or two or more types may be used in combination.

From the viewpoint of increasing the ratio A'/B' between the concentration ratios, the surfactant (C) is preferably a sugar-based surfactant, more preferably a sugar fatty acid ester, and still more preferably a sucrose fatty acid ester.

In the case where the surfactant (C) includes a non-polymerizable surfactant, the total content of the non-polymerizable surfactant in the surfactant (C) may be 30 mass% or more, 50 mass% or more, 60 mass% or more, 80 mass% or more, or 100 mass%.

In the case where the surfactant (C) includes a sugar-based surfactant, the total content of the sugar-based surfactant in the surfactant (C) may be 30 mass% or more, 50 mass% or more, 60 mass% or more, 80 mass% or more, or 100 mass%.

In the case where the surfactant (C) includes a sugar fatty acid ester, the total content of the sugar fatty acid ester in the surfactant (C) may be 30 mass% or more, 50 mass% or more, 60 mass% or more, 80 mass% or more, or 100 mass%.

In the case where the surfactant (C) contains a polymerizable surfactant, the total content of the polymerizable surfactant in the surfactant (C) may be 70 mass% or less, 50 mass% or less, 40 mass% or less, 20 mass% or less, or 0 mass%.

The curable composition of the present invention may further contain an optional component in addition to the silicone-based (meth)acrylate (A), the hydrophilic monomer (B), and the surfactant (C).

Examples of the optional component include a crosslinker (D), a polymerization initiator (E), and other components.

Crosslinker (D)

The curable composition of the present invention may contain the crosslinker (D) for the purpose of improving the solvent resistance of the resulting silicone hydrogel and adjusting the elastic modulus, moisture content, and the like of the silicone hydrogel.

The crosslinker (D) preferably has two or more polymerizable unsaturated groups.

Examples of the crosslinker (D) include (meth)acrylate-based crosslinkers such as ethylene glycol di(meth)acrylate, diethylene glycol di(meth)acrylate, triethylene glycol di(meth)acrylate, tetraethylene glycol di(meth)acrylate, polyethylene glycol di(meth)acrylate, allyl methacrylate, trimethylolpropane tri(meth)acrylate, (2-allyloxy)ethyl methacrylate, and 2-(2-vinyloxyethoxy)ethyl (meth)acrylate; vinyl ether-based crosslinkers such as ethylene glycol divinyl ether, diethylene glycol divinyl ether, and triethylene glycol divinyl ether; allyl ether-based crosslinkers such as triethylene glycol diallyl ether and tetraethylene glycol diallyl ether; and methylenebisacrylamide.

The crosslinker (D) is preferably a (meth)acrylate-based crosslinker, and more preferably ethylene glycol di(meth)acrylate or polyethylene glycol di(meth)acrylate.

For the crosslinker (D), a single type may be used alone or two or more may be used in combination.

The content of the crosslinker (D) in the curable composition is preferably from 0.1 to 10 mass%, and more preferably from 0.5 to 5 mass%. When the content is within the above-mentioned range, the silicone hydrogel has good moldability and solvent resistance.

Polymerization Initiator (E)

The curable composition of the present invention may contain the polymerization initiator (E) in order to promote the polymerization reaction effectively.

Examples of the polymerization initiator include known photopolymerization initiators and thermal polymerization initiators.

Examples of the photopolymerization initiator include benzil, benzophenone and derivatives thereof, thioxanthones, benzil dimethyl ketals, α-hydroxyalkylphenones, α-hydroxyacetophenones, hydroxyketones, aminoalkylphenones, acylphosphine oxides, and oxime ester compounds.

α-Hydroxyalkylphenones are preferable because they are less likely to cause yellowing during curing and give a transparent cured product.

Examples of the thermal polymerization initiator include known organic peroxides and azo compounds.

For the polymerization initiator (E), a single type may be used alone or two or more types may be used in combination.

The content of the polymerization initiator (E) in the curable composition is preferably from 0.1 to 3 parts by mass, more preferably from 0.1 to 2 parts by mass, and still more preferably from 0.2 to 1 part by mass on the basis of the total of the monomer components in the curable composition taken as 100 parts by mass. When the content is within the above-mentioned range, the curable composition has a high polymerization rate, and a decomposition product derived from the polymerization initiator (E) is less likely to remain.

Additional Components

The curable composition of the present invention may contain, for example, additional monomers (monomers other than the silicone-based (meth)acrylate (A) and other than the hydrophilic monomer (B)), a polymerizable ultraviolet absorber, and a polymerizable dye (colorant), as long as the object of the present invention is not impaired.

Proportions of Components in Curable Composition

The content of the silicone-based (meth)acrylate (A) in the curable composition is preferably from 4 to 50 mass%, and more preferably from 10 to 40 mass%. When the content is within the above-mentioned range, the silicone hydrogel has good surface hydrophilicity, transparency, and oxygen permeability.

The content of the hydrophilic monomer (B) in the curable composition is preferably from 5 to 95 mass%, and more preferably from 20 to 90 mass%. When the content is within the above-mentioned range, the silicone hydrogel has good surface hydrophilicity and transparency.

The content of the surfactant (C) in the curable composition is preferably 1 mass% or more, more preferably from 1 to 12 mass%, and still more preferably from 1 to 10 mass%.

When the content is 1 mass% or more, the molded silicone hydrogel is likely to have sufficient hydrophilicity, and when the content is 12 mass% or less, the silicone hydrogel is less likely to be cloudy.

Method for Producing Silicone Hydrogel

The method for producing a silicone hydrogel of the present invention includes the following steps (1) to (4).

Step (1)

Step of preparing a curable composition containing a silicone-based (meth)acrylate (A), a hydrophilic monomer (B), and at least one surfactant (C)

The components of the silicone-based (meth)acrylate (A), the hydrophilic monomer (B), and the surfactant (C) are as described above.

The curable composition of the present invention can be prepared, for example, by putting the components into a stirring (mixing) apparatus in any order or all at once, and stirring (mixing) the components at a temperature of from 10 to 50°C until the resulting mixture becomes uniform.

Step (2)

Step of molding the curable composition prepared in step (1) using a hydrophobic mold to produce a cured product

The hydrophobic mold is a mold used for filling the curable composition therein and promoting the polymerization reaction, and is a mold having a hydrophobic surface.

The hydrophobic mold is preferably a polyolefin mold, and more preferably a polypropylene mold.

The curable composition is filled in the hydrophobic mold and subjected to a polymerization reaction to produce a cured product. The polymerization reaction can be promoted by irradiating the curable composition with active energy rays or heating the curable composition.

In the case of promoting the polymerization reaction by irradiation with active energy rays, examples of the active energy rays include ultraviolet rays and electron beams. Examples of the ultraviolet ray source include a high-pressure mercury lamp. The amount of ultraviolet energy is preferably from about 0.1 to 10 $J/cm^2$.

In the case of promoting the polymerization reaction by heating, the temperature and the heating time are not particularly limited, but the temperature may be from 60 to 140°C and the heating time may be from 0.1 to 12 hours.
The polymerization reaction may be performed in the air, or may be performed in an inert gas atmosphere such as nitrogen or argon for the purpose of improving the polymerization rate of the monomer.
After the polymerization reaction, the hydrophobic mold may be deformed to take out the cured product in a dry state.
Alternatively, the cured product may be immersed in a solvent (e.g., water, methanol, ethanol, 1-propanol, 2-propanol, or a mixture thereof) together with the hydrophobic mold to be swollen, and then the cured product may be released from the hydrophobic mold. In this case, when the solvent contains water, the product taken out is the silicone hydrogel.
It is preferable to take out the cured product after the polymerization reaction in a dry state without using a solvent.

Step (3)

Step of swelling the cured product produced in step (2) with water

In the case where the cured product is taken out in a dry state in step (2), the resulting cured product is immersed in a solvent containing water (water, or a mixture of water and an alcohol (methanol, ethanol, 1-propanol, or 2-propanol)) to be swollen, thereby producing a silicone hydrogel. Here, step (4) may be performed without step (3).
In the case where the cured product is immersed in the solvent to be swollen and then taken out in step (2), step (3) can be omitted.

Step (4)

Step of washing the silicone hydrogel or cured product produced in step (3)

The resulting silicone hydrogel or cured product may be a mixture of two or more types of the surfactant (C), unreacted monomer components (unreacted materials), residues of various components, by-products, and the like. Therefore, for example, after solvation, the mixture is washed by an operation of repeated replacement with a new solvent.
Examples of the solvent used for washing include water, methanol, ethanol, 1-propanol, 2-propanol, and mixtures thereof, and the water may be a buffer solution such as a phosphate buffer solution. The washing is preferably performed a plurality of times, and solvents of different types or different concentrations may be used. A solvent containing water is preferably used.
The washing operation is not particularly limited.
For example, it is possible to blend 2-propanol with a phosphate buffer solution at a ratio of 1 : 1 and heat the mixture to 60°C to prepare a solution, put the silicone hydrogel into the solution, immerse the silicone hydrogel in the solution for a predetermined time, and then immerse the silicone hydrogel in a phosphate buffer solution preheated to 60°C for a predetermined time. Such a washing operation can discharge the unreacted materials, residues of the surfactant or the like, by-products, and the like contained in the silicone hydrogel to the outside. Specifically, the method described in Examples can be employed.
The silicone hydrogel produced in step (3) or the cured product can be further hydrated.
The hydration is preferably performed by immersing the cured product in water or physiological saline at a temperature of 10 to 90°C for 10 minutes or more.
The resulting silicone hydrogel may be sterilized under high temperature and high pressure. Depending on the shape and size of the silicone hydrogel, the treatment may be performed, for example, in an autoclave at 121°C and 2 atm for 20 minutes.

Mechanism of Action

According to the method for producing a silicone hydrogel of the present invention, the at least one surfactant (C) contained in the curable composition pseudo-hydrophilizes the surface (inner wall surface) of the hydrophobic mold to unevenly distribute the hydrophilic monomer (B) on the surface of the silicone hydrogel, whereby, even after the surfactant (C) is discharged in the washing step, a silicone hydrogel having high surface hydrophilicity can be produced.
This means that the silicone hydrogel is less likely to cause a decrease in surface hydrophilicity due to friction or washing in an actual use scene.
In view of the above, unlike known techniques, the silicone hydrogel of the present invention is characterized in that it does not require a surface treatment for hydrophilization, such as a plasma treatment.

Contact Lens

The silicone hydrogel of the present invention has excellent surface hydrophilicity and transparency.
Therefore, the silicone hydrogel of the present invention is particularly useful as an ophthalmic device such as a contact lens, an intraocular lens, or an artificial cornea.
FIG. 2 is a perspective view illustrating an example of a contact lens containing a silicone hydrogel of the present invention. FIG. 3 is a cross-sectional view illustrating an example of the contact lens containing the silicone hydrogel of the present invention. In FIG. 3, reference sign 201 denotes a convex portion, reference sign 202 denotes a concave portion, and reference sign 203 denotes a peripheral portion.
In the case where the silicone hydrogel is used as a contact lens, the film thickness of the silicone hydrogel is preferably from 0.01 to 4 mm, more preferably from 0.01 to 3 mm, still more preferably from 0.02 to 2 mm, and particularly preferably from 0.03 to 1 mm.
The contact lens of the present invention can be produced using the method for producing a silicone hydrogel of the present invention.

Examples

Next, the present invention will be described in more detail with reference to examples. However, the present invention is not limited to the examples described below.
In the following description, "parts" and "%" respectively represent "parts by mass" and "mass%".

Evaluation Method

(1) Film Thickness

Using a 1/1000 mm dial gauge, the film thickness was measured at three randomly determined points in an in-plane surface of a silicone hydrogel. The average value of the measurements was taken as the film thickness of the silicone hydrogel.

(2) Contact Angle

The moisture on the surface of the silicone hydrogel was thoroughly wiped off, and using a contact angle meter ("DropMaster 500" manufactured by Kyowa Interface Science Co., Ltd.), 2 μL of pure water was dropped on the silicone hydrogel, and the contact angle after 10 seconds was measured.
The measurement was performed at room temperature (25°C), and a surface of the silicone hydrogel that had been in contact with a convex surface of a polypropylene mold during curing was subjected to the measurement.

(3) Transparency

The total light transmittance of the silicone hydrogel was measured in accordance with JIS K 7136 (2000) using a haze meter NDH-7000II (manufactured by Nippon Denshoku Industries Co., Ltd.).
The total light transmittance of a silicone hydrogel sample having a film thickness of 0.8 mm was measured, and transparency was evaluated as follows.

A: Total light transmittance is 93% or more
B: Total light transmittance is less than 93%

(4) Atom Concentration of Each Type of Atoms

In a dried body produced by removing water from the silicone hydrogel, the concentration of silicon atoms in the thickness direction of the dried body were measured by depth profiling using XPS (X-ray photoelectron spectroscopy). Specifically, from the surface of the dried body, which was the contacted surface of the silicone hydrogel (lens) (that is, the surface of the lens on the side in contact with the eye (the concave surface of the lens)), a first measurement point (etching time: 0, the outermost surface of the dried body), a second measurement point (etching time: 50 seconds), and so on were sequentially set in the thickness direction of the dried body, and the silicon atom concentration was determined at each of the measurement points up to the 16th measurement point (etching time: 750 seconds). The silicon concentration distribution represents the proportion of the silicon atoms when for each of carbon, oxygen, nitrogen, silicon, and fluorine, which are elements contained in the dried body, and sodium, chlorine, and phosphorus derived from the phosphate buffer

solution, the number of atoms is measured, and the total of the measured numbers of atoms thereof is taken as 100 atm%. The atom concentration of each type of atoms was similarly determined.

The measurement conditions are as follows.

Measurement apparatus: K-Alpha (Thermo Fisher Scientific, Inc.)
X-ray monochromatized Al Kα
Spot size: 400 μm
Take-off angle (angle formed by sample surface and detector) 90 degrees
Etching conditions: ionization energy 3000 eV × 50s pitch
Ion gun: Ar monatomic ion

(5) Measurement of Moisture Content

The produced silicone hydrogel was immersed in a phosphate buffer solution for 3 hours or more, the moisture on the surface of the sufficiently swollen gel was wiped off with a Kimwipe or the like, and the weight (W1) was measured at room temperature. The silicone hydrogel was then dried in a dryer set at 90°C for 24 hours, and the weight (W2) was measured again. The moisture content was determined according to the following equation.

$$\text{Moisture content (\%)} = (W1 - W2)/W1 \times 100$$

Surfactant

(C1): Sucrose fatty acid ester ("RYOTO Sugar Ester P-1670" manufactured by Mitsubishi Chemical Corporation, HLB value: 16, palmitic acid)
(C2): Sucrose fatty acid ester ("RYOTO Sugar Ester S-1570" manufactured by Mitsubishi Chemical Corporation, HLB value: 15, stearic acid)
(C3): Polyoxyethylene oleyl ether ("NONION (trade name) E-215" manufactured by NOF Corporation, HLB value: 14.4)

Monomer Mixture

For the silicone-based (meth)acrylate (A), a compound (A1), a compound (A2-1), or a compound (A2-2) was used alone or at least two thereof were used in combination.

For the compound (A1), a silicone macromonomer ("MFR-M15" manufactured by Gelest, Inc.) was used. For the compound (A2-1), siloxanyl acrylate ("BX-SiGMMA" (methyl di(trimethylsiloxy)silylpropyl glyceryl methacrylate) manufactured by Bimax, Inc.) was used. For the compound (A2-2), 3-[tris(trimethylsilyloxy)silyl]propyl methacrylate (TRIS, "SIM6487.6" manufactured by Gelest, Inc.) was used.

For the hydrophilic monomer (B), a compound (B1), a compound (B2), or a compound (B3) were used alone or at least two thereof were used in combination.

For the compound (B1), N,N-dimethylacrylamide (DMA, manufactured by Tokyo Chemical Industry Co., Ltd.) was used. For the compound (B2), 2-hydroxyethyl methacrylate (HEMA, manufactured by Tokyo Chemical Industry Co., Ltd.) was used. For the compound (B3), N-vinyl-2-pyrrolidone (NVP, manufactured by Tokyo Chemical Industry Co., Ltd.) was used.

For the crosslinker (D), polyethylene glycol (PEG 200) dimethacrylate was used. For the polymerization initiator (E), 2,2'-azobis(isobutyronitrile) (AIBN) was used.

The polymerization initiator (E) was used in an amount of 1 part with respect to 100 parts in total of the components (A), (B), and (D).

Example 1

For the surfactant (C), a surfactant (C1) was used. The surfactant (C1) was added according to the formulation shown in Table 1 with respect to 100 parts in total of the components (A), (B), and (D) of the monomer mixture. The polymerization initiator (E) was further added, and the resulting mixture was stirred at room temperature to produce a curable composition having the formulation shown in Table 1.

The surfactant (C1) was uniformly mixed so that a colorless and transparent liquid curable composition was

produced.

As a hydrophobic mold used for curing the curable composition, a general-purpose polypropylene mold was used.

The resulting curable composition was poured into the general-purpose polypropylene mold, placed in an oven preheated to 90°C, and cured overnight.

The resulting cured product was then taken out from the hydrophobic mold. The cured product was taken out from the hydrophobic mold in a dry state without using a solvent.

The cured product taken out was immersed in water to be sufficiently swollen, whereby a silicone hydrogel was produced.

In order to discharge the surfactant (C) and the like contained in the silicone hydrogel to the outside, the following was performed. The silicone hydrogel was immersed in a solution in an amount of at least 1000 times the dry weight of the silicone hydrogel at 60°C for 1 hour. The solution was produced by blending 2-propanol with a phosphate buffer solution at a ratio of 1 : 1. Then, the silicone hydrogel was immersed in a phosphate buffer solution at 60°C for 1 hour, followed by washing.

Using the resulting silicone hydrogel, the film thickness, contact angle, and transparency were evaluated.

The film thickness was 0.13 mm. The evaluation results of the contact angle, transparency, and moisture content are shown in Table 1.

In addition, the resulting silicone hydrogel was immersed in pure water for 24 hours, then taken out from the water, and freeze-dried to remove moisture, and the distribution of each element in the depth direction of the dried body was measured using XPS. The results are shown in Table 3.

The results of calculation of the oxygen atom distribution/silicon atom distribution are shown in Table 2.

Examples 2 to 4 and Comparative Examples 1 and 2

A silicone hydrogel was produced in the same manner as in Example 1 except that the components (A), (B), and (D) of the monomer mixture were changed to those shown in Table 1, and that the type and amount of the surfactant were changed to those shown in Table 1. The film thickness was 0.13 mm. The evaluation results of the contact angle and transparency are shown in Table 1.

Further, the distribution of each element in the depth direction of the dried body was measured using XPS. The results of Example 2 are shown in Table 4, the results of Example 3 are shown in Table 5, the results of Example 4 are shown in Table 6, the results of Comparative Example 1 are shown in Table 7, and the results of Comparative Example 2 are shown in Table 8.

The results of calculation of the oxygen atom distribution/silicon atom distribution are shown in Table 2.

[Table 1]

| | | Examples | | | | Comparative Examples | |
|---|---|---|---|---|---|---|---|
| | | 1 | 2 | 3 | 4 | 1 | 2 |
| Monomer mixture (parts) | Compound (A1) | 10 | 10 | 10 | | | 10 |
| | Compound (A2-1) | 20 | 20 | 20 | | | 20 |
| | Compound (A2-2) | | | | 40 | 40 | |
| | Hydrophilic monomer (B1) | 68 | 68 | 68 | | | 68 |
| | Hydrophilic monomer (B2) | | | | 38 | 38 | |
| | Hydrophilic monomer (B3) | | | | 20 | 20 | |
| | Crosslinker (D) | 2 | 2 | 2 | 2 | 2 | 2 |
| Surfactant (parts) | (C1) | 5 | 5 | | | | |
| | (C2) | | | 5 | 5 | | |
| | (C3) | | 3 | | | | 5 |
| Average value (A') of from 1st measurement point to 3rd measurement point Oxygen atom concentration/silicon atom concentration | | 1.94 | 2.11 | 2.04 | 2.92 | 1.40 | 1.00 |

(continued)

| | | Examples | | | | Comparative Examples | |
|---|---|---|---|---|---|---|---|
| | | 1 | 2 | 3 | 4 | 1 | 2 |
| Average value (B') of from 14th measurement point to 16th measurement point Oxygen atom concentration/silicon atom concentration | | 0. 64 | 0.62 | 0.81 | 1.74 | 1.18 | 1.11 |
| A'/B' (-) | | 3.03 | 3.40 | 2.54 | 1.68 | 1.19 | 0.90 |
| (A'/B' with surfactant)/(A'/B' without surfactant) | | 1.64 | 1.84 | 1.37 | 1.42 | 1.00 | 0.76 |
| Water droplet contact angle | (degrees) | 41.0 | 40.0 | 71.6 | 51.1 | 85.3 | 89.2 |
| Transparency | (-) | A | A | A | A | A | A |
| Moisture content | (%) | 59.7 | 61.7 | 58.6 | 44.3 | 45.7 | 59.3 |

[Table 2]

| | Examples | | | | Comparative Examples | |
|---|---|---|---|---|---|---|
| | 1 | 2 | 3 | 4 | 1 | 2 |
| 1st measurement point | 3.31 | 3.36 | 3.29 | 4.16 | 1.77 | 1.04 |
| 2nd measurement point | 1.50 | 1.71 | 1.55 | 2.37 | 1.16 | 1.00 |
| 3rd measurement point | 1.01 | 1.26 | 1.29 | 2.24 | 1.26 | 0.95 |
| 4th measurement point | 0.79 | 0.85 | 1.07 | 2.21 | 1.29 | 0.93 |
| 5th measurement point | 0.70 | 0.72 | 0.95 | 2.15 | 1.28 | 0.95 |
| 6th measurement point | 0.72 | 0.70 | 0.88 | 2.09 | 1.27 | 0.96 |
| 7th measurement point | 0.71 | 0.66 | 0.83 | 2.00 | 1.26 | 0.97 |
| 8th measurement point | 0.67 | 0.66 | 0.84 | 2.02 | 1.24 | 1.00 |
| 9th measurement point | 0.68 | 0.66 | 0.83 | 1.98 | 1.23 | 1.00 |
| 10th measurement point | 0.67 | 0.64 | 0.79 | 1.88 | 1.22 | 1.03 |
| 11th measurement point | 0.67 | 0.65 | 0.81 | 1.87 | 1.19 | 1.06 |
| 12th measurement point | 0.67 | 0.64 | 0.80 | 1.82 | 1.21 | 1.07 |
| 13th measurement point | 0.66 | 0.62 | 0.78 | 1.75 | 1.18 | 1.09 |
| 14th measurement point | 0.64 | 0.65 | 0.81 | 1.79 | 1.16 | 1.10 |
| 15th measurement point | 0.63 | 0.63 | 0.81 | 1.73 | 1.23 | 1.10 |
| 16th measurement point | 0.65 | 0.59 | 0.79 | 1.70 | 1.14 | 1.12 |

[Table 3]

| Atomic % | C | F | O | N | Si | P | O/Si |
|---|---|---|---|---|---|---|---|
| 1st measurement point | 66.0 | 2.9 | 18.1 | 6.4 | 5.5 | 0.0 | 3.3 |
| 2nd measurement point | 47.0 | 3.5 | 26.5 | 4.4 | 17.6 | 0.0 | 1.5 |
| 3rd measurement point | 60.0 | 3.4 | 14.6 | 6.7 | 14.5 | 0.0 | 1.0 |
| 4th measurement point | 67.3 | 2.9 | 9.8 | 7.2 | 12.4 | 0.0 | 0.8 |
| 5th measurement point | 69.7 | 3.2 | 8.1 | 7.1 | 11.7 | 0.0 | 0.7 |
| 6th measurement point | 69.7 | 3.2 | 8.1 | 7.4 | 11.2 | 0.0 | 0.7 |

(continued)

| Atomic % | C | F | O | N | Si | P | O/Si |
|---|---|---|---|---|---|---|---|
| 7th measurement point | 70.6 | 3.4 | 7.8 | 7.1 | 11.0 | 0.0 | 0.7 |
| 8th measurement point | 70.7 | 3.4 | 7.4 | 7.1 | 11.1 | 0.1 | 0.7 |
| 9th measurement point | 71.2 | 3.3 | 7.3 | 7.2 | 10.7 | 0.0 | 0.7 |
| 10th measurement point | 71.3 | 3.2 | 7.4 | 6.7 | 11.1 | 0.0 | 0.7 |
| 11th measurement point | 71.3 | 3.3 | 7.4 | 6.9 | 11.1 | 0.0 | 0.7 |
| 12th measurement point | 71.6 | 3.4 | 7.3 | 6.5 | 11.0 | 0.0 | 0.7 |
| 13th measurement point | 71.8 | 3.3 | 7.3 | 6.6 | 11.0 | 0.0 | 0.7 |
| 14th measurement point | 71.9 | 3.1 | 7.2 | 6.4 | 11.3 | 0.0 | 0.6 |
| 15th measurement point | 71.9 | 3.0 | 7.2 | 6.4 | 11.3 | 0.0 | 0.6 |
| 16th measurement point | 72.3 | 2.9 | 7.3 | 6.0 | 11.3 | 0.0 | 0.6 |

[Table 4]

| Atomic % | C | F | O | N | Si | P | O/Si |
|---|---|---|---|---|---|---|---|
| 1st measurement point | 66.1 | 2.7 | 18.5 | 6.2 | 5.5 | 0.0 | 3.4 |
| 2nd measurement point | 39.4 | 3.2 | 33.0 | 3.3 | 19.3 | 0.0 | 1.7 |
| 3rd measurement point | 52.7 | 3.3 | 20.9 | 5.9 | 16.6 | 0.0 | 1.3 |
| 4th measurement point | 66.8 | 2.8 | 10.8 | 6.5 | 12.7 | 0.0 | 0.9 |
| 5th measurement point | 71.2 | 2.6 | 8.0 | 6.7 | 11.2 | 0.0 | 0.7 |
| 6th measurement point | 73.0 | 2.6 | 7.4 | 6.3 | 10.6 | 0.0 | 0.7 |
| 7th measurement point | 73.8 | 2.7 | 6.8 | 6.3 | 10.3 | 0.0 | 0.7 |
| 8th measurement point | 73.6 | 2.7 | 6.9 | 6.2 | 10.5 | 0.0 | 0.7 |
| 9th measurement point | 74.2 | 2.8 | 6.7 | 6.1 | 10.2 | 0.0 | 0.7 |
| 10th measurement point | 74.5 | 2.8 | 6.6 | 5.7 | 10.3 | 0.0 | 0.6 |
| 11th measurement point | 74.7 | 2.8 | 6.6 | 5.7 | 10.2 | 0.0 | 0.6 |
| 12th measurement point | 74.8 | 2.7 | 6.5 | 5.7 | 10.1 | 0.0 | 0.6 |
| 13th measurement point | 74.4 | 2.7 | 6.5 | 5.7 | 10.5 | 0.0 | 0.6 |
| 14th measurement point | 74.7 | 2.7 | 6.6 | 5.7 | 10.3 | 0.0 | 0.6 |
| 15th measurement point | 74.7 | 2.7 | 6.5 | 5.6 | 10.4 | 0.0 | 0.6 |
| 16th measurement point | 75.1 | 2.6 | 6.2 | 5.5 | 10.5 | 0.0 | 0.6 |

[Table 5]

| Atomic % | C | F | O | N | Si | P | O/Si |
|---|---|---|---|---|---|---|---|
| 1st measurement point | 65.7 | 2.2 | 18.4 | 7.0 | 5.6 | 0.4 | 3.3 |
| 2nd measurement point | 59.3 | 2.1 | 17.8 | 5.9 | 11.4 | 1.0 | 1.6 |
| 3rd measurement point | 64.1 | 2.0 | 13.7 | 6.6 | 10.6 | 0.7 | 1.3 |
| 4th measurement point | 67.4 | 2.2 | 11.2 | 6.8 | 10.5 | 0.3 | 1.1 |
| 5th measurement point | 69.4 | 2.3 | 10.0 | 6.8 | 10.5 | 0.2 | 0.9 |
| 6th measurement point | 70.9 | 2.0 | 9.4 | 6.5 | 10.6 | 0.0 | 0.9 |
| 7th measurement point | 71.7 | 2.0 | 8.8 | 6.4 | 10.6 | 0.1 | 0.8 |
| 8th measurement point | 72.1 | 2.1 | 8.7 | 6.2 | 10.4 | 0.0 | 0.8 |

(continued)

| Atomic % | C | F | O | N | Si | P | O/Si |
|---|---|---|---|---|---|---|---|
| 9th measurement point | 71.8 | 2.1 | 8.7 | 6.5 | 10.6 | 0.0 | 0.8 |
| 10th measurement point | 72.3 | 2.1 | 8.4 | 6.3 | 10.6 | 0.0 | 0.8 |
| 11th measurement point | 72.4 | 2.0 | 8.5 | 6.2 | 10.5 | 0.1 | 0.8 |
| 12th measurement point | 72.7 | 1.9 | 8.3 | 6.4 | 10.4 | 0.1 | 0.8 |
| 13th measurement point | 72.9 | 1.9 | 8.1 | 6.3 | 10.4 | 0.0 | 0.8 |
| 14th measurement point | 72.8 | 1.9 | 8.3 | 6.5 | 10.3 | 0.0 | 0.8 |
| 15th measurement point | 72.9 | 2.0 | 8.3 | 6.3 | 10.2 | 0.0 | 0.8 |
| 16th measurement point | 73.1 | 1.8 | 8.3 | 6.3 | 10.4 | 0.0 | 0.8 |

[Table 6]

| Atomic % | C | F | O | N | Si | P | O/Si |
|---|---|---|---|---|---|---|---|
| 1st measurement point | 68.3 | 0.0 | 23.7 | 1.9 | 5.7 | 0.0 | 4.2 |
| 2nd measurement point | 74.3 | 0.0 | 16.5 | 1.7 | 7.0 | 0.0 | 2.4 |
| 3rd measurement point | 74.7 | 0.0 | 16.1 | 1.6 | 7.2 | 0.0 | 2.2 |
| 4th measurement point | 75.1 | 0.0 | 15.6 | 1.7 | 7.1 | 0.0 | 2.2 |
| 5th measurement point | 75.3 | 0.0 | 15.4 | 1.8 | 7.1 | 0.0 | 2.1 |
| 6th measurement point | 75.7 | 0.0 | 14.9 | 1.6 | 7.1 | 0.0 | 2.1 |
| 7th measurement point | 76.1 | 0.0 | 14.1 | 2.0 | 7.1 | 0.0 | 2.0 |
| 8th measurement point | 76.7 | 0.0 | 13.9 | 2.1 | 6.9 | 0.0 | 2.0 |
| 9th measurement point | 76.8 | 0.0 | 13.7 | 2.2 | 6.9 | 0.0 | 2.0 |
| 10th measurement point | 77.5 | 0.0 | 13.2 | 1.9 | 7.0 | 0.0 | 1.9 |
| 11th measurement point | 77.7 | 0.0 | 12.9 | 1.9 | 6.9 | 0.0 | 1.9 |
| 12th measurement point | 77.8 | 0.0 | 12.5 | 2.3 | 6.9 | 0.0 | 1.8 |
| 13th measurement point | 78.0 | 0.0 | 12.2 | 2.3 | 7.0 | 0.0 | 1.8 |
| 14th measurement point | 78.7 | 0.0 | 12.1 | 2.3 | 6.7 | 0.0 | 1.8 |
| 15th measurement point | 78.5 | 0.1 | 11.8 | 2.5 | 6.8 | 0.0 | 1.7 |
| 16th measurement point | 78.7 | 0.0 | 11.6 | 2.4 | 6.8 | 0.0 | 1.7 |

[Table 7]

| Atomic % | C | F | O | N | Si | P | O/Si |
|---|---|---|---|---|---|---|---|
| 1st measurement point | 63.3 | 1.1 | 21.7 | 1.7 | 12.2 | 0.0 | 1.8 |
| 2nd measurement point | 76.2 | 0.2 | 11.6 | 1.8 | 10.0 | 0.0 | 1.2 |
| 3rd measurement point | 78.1 | 0.1 | 10.9 | 2.0 | 8.7 | 0.0 | 1.3 |
| 4th measurement point | 78.3 | 0.1 | 10.8 | 2.1 | 8.4 | 0.0 | 1.3 |
| 5th measurement point | 78.7 | 0.2 | 10.5 | 2.0 | 8.3 | 0.1 | 1.3 |
| 6th measurement point | 78.7 | 0.2 | 10.7 | 1.8 | 8.4 | 0.0 | 1.3 |
| 7th measurement point | 78.8 | 0.2 | 10.3 | 2.2 | 8.2 | 0.0 | 1.3 |
| 8th measurement point | 79.6 | 0.1 | 10.0 | 2.0 | 8.1 | 0.0 | 1.2 |
| 9th measurement point | 79.6 | 0.1 | 9.9 | 2.1 | 8.1 | 0.0 | 1.2 |
| 10th measurement point | 79.8 | 0.0 | 9.7 | 2.3 | 7.9 | 0.0 | 1.2 |

(continued)

| Atomic % | C | F | O | N | Si | P | O/Si |
|---|---|---|---|---|---|---|---|
| 11th measurement point | 80.2 | 0.0 | 9.3 | 2.2 | 7.8 | 0.0 | 1.2 |
| 12th measurement point | 80.8 | 0.0 | 9.3 | 2.0 | 7.6 | 0.0 | 1.2 |
| 13th measurement point | 80.8 | 0.0 | 9.0 | 2.2 | 7.6 | 0.0 | 1.2 |
| 14th measurement point | 80.5 | 0.1 | 9.0 | 2.5 | 7.7 | 0.0 | 1.2 |
| 15th measurement point | 81.0 | 0.1 | 9.0 | 2.4 | 7.3 | 0.0 | 1.2 |
| 16th measurement point | 81.1 | 0.0 | 8.7 | 2.4 | 7.6 | 0.0 | 1.1 |

[Table 8]

| Atomic % | C | F | O | N | Si | P | O/Si |
|---|---|---|---|---|---|---|---|
| 1st measurement point | 48.3 | 26.5 | 11.6 | 0.6 | 11 1 | 0.0 | 1.0 |
| 2nd measurement point | 47.0 | 23.4 | 13.3 | 0.4 | 13.4 | 0.0 | 1.0 |
| 3rd measurement point | 47.3 | 21.0 | 13.7 | 1.1 | 14.4 | 0.0 | 1.0 |
| 4th measurement point | 47.7 | 19.5 | 14.0 | 1.3 | 15.0 | 0.0 | 0.9 |
| 5th measurement point | 48.0 | 18.5 | 14.3 | 1.6 | 15.2 | 0.0 | 0.9 |
| 6th measurement point | 48.8 | 17.2 | 14.6 | 1.6 | 15.3 | 0.0 | 1.0 |
| 7th measurement point | 48.9 | 16.7 | 14.7 | 1.7 | 15.2 | 0.0 | 1.0 |
| 8th measurement point | 48.6 | 16.2 | 15.2 | 1.8 | 15.3 | 0.0 | 1.0 |
| 9th measurement point | 48.7 | 15.3 | 15.3 | 2.5 | 15.2 | 0.1 | 1.0 |
| 10th measurement point | 48.9 | 14.8 | 15.8 | 2.5 | 15.3 | 0.0 | 1.0 |
| 11th measurement point | 48.8 | 14.7 | 16.2 | 2.4 | 15.3 | 0.0 | 1.1 |
| 12th measurement point | 48.7 | 14.1 | 16.5 | 2.6 | 15.4 | 0.0 | 1.1 |
| 13th measurement point | 49.0 | 13.8 | 16.5 | 2.8 | 15.1 | 0.0 | 1.1 |
| 14th measurement point | 48.8 | 13.4 | 16.8 | 3.2 | 15.3 | 0.0 | 1.1 |
| 15th measurement point | 49.0 | 13.4 | 17.0 | 2.6 | 15.4 | 0.0 | 1.1 |
| 16th measurement point | 48.7 | 13.0 | 17.3 | 2.9 | 15.4 | 0.0 | 1.1 |

As shown in Table 1, the silicone hydrogels of Examples 1 to 4 satisfied a contact angle of 75° or less after washing, which is a standard for a good contact angle. Among them, in Examples 1, 2, and 4, the silicone hydrogels satisfied a contact angle of 60° or less after washing, which is a standard for a better contact angle. It was confirmed that the silicone hydrogels maintained the high surface hydrophilicity even after sufficient washing with 2-propanol or the phosphate buffer solution.

The silicone hydrogels of Examples 1 to 4 had a high total light transmittance and good transparency.

In contrast, it was confirmed that although the silicone hydrogels of Comparative Examples 1 and 2 had good transparency, they had insufficient surface hydrophilicity after sufficient washing with 2-propanol or the phosphate buffer solution.

Focusing on the ratio between the oxygen atom concentration and the silicon atom concentration at the outermost surface of the dried body measured by XPS, it was confirmed that in all of Examples 1 to 4, the ratio between the oxygen atom concentration and the silicon atom concentration was larger than that in Comparative Examples 1 and 2, and it was confirmed that segregation of silicone to the outermost surface was suppressed.

In addition, focusing on A'/B' and (A'/B' with surfactant)/(A'/B' without surfactant) in Table 1, the values of Examples 1 to 4 were larger than that of Comparative Example 1. Therefore, it was found that addition of at least one specific surfactant (C) can suppress segregation of silicone to the outermost surface.

Further, focusing on the moisture content, it was confirmed that the change in the moisture content in Example 4 was within +2% from that in Comparative Example 1. These results show that even when the surfactant was added, the physical properties of the gel were hardly changed owing to the washing step.

From the above, it was confirmed that use of at least one specific surfactant (C) can suppress the surface segregation of silicone and decrease the contact angle of the surface. Therefore, the usefulness of adding a surfactant before curing was confirmed.

Reference Signs List

10 X-ray photoelectron spectrometer
20 Gas ion beam device
30 Sample stage
100 Sample
200 Contact lens
201 Convex portion
202 Concave portion
203 Peripheral portion

## Claims

1. A silicone hydrogel comprising water, wherein

   in a dried body produced by removing water from the silicone hydrogel, a ratio (A'/B') of an average value (A') of O/Si concentration ratios at a first measurement point to a third measurement point to an average value (B') of O/Si concentration ratios at a 14th measurement point to a 16th measurement point is 1.20 or more, where
   each of the O/Si concentration ratios is a ratio of a proportion (atm%) of oxygen atoms to a proportion (atm%) of silicon atoms, the ratio being calculated from the proportion of oxygen atoms and the proportion of silicon atoms, the proportion of oxygen atoms and the proportion of silicon atoms being obtained by depth profiling using X-ray photoelectron spectroscopy at a surface of the dried body, and in etching of the dried body in a thickness direction from an outermost surface of the dried body by irradiation with an Ar ion beam generated under conditions of an ionizing energy of 3000 eV, a total of 16 measurement points are set in such a manner that the first measurement point (etching time: 0 seconds, the outermost surface of the dried body), a second measurement point (etching time: 50 seconds), and so on are sequentially set at every 50 seconds to the 16th measurement point (etching time: 750 seconds), and at each of the total of 16 measurement points, the corresponding O/Si concentration ratio is determined.

2. The silicone hydrogel according to claim 1, further comprising a cured product of a curable composition, wherein
   the curable composition contains a silicone-based (meth)acrylate (A), a hydrophilic monomer (B), and a surfactant (C).

3. The silicone hydrogel according to claim 2, wherein the hydrophilic monomer (B) comprises a monomer having, in a molecule, at least one selected from the group consisting of a hydroxy group, an amino group, a carboxy group, a (meth)acryloyl group, an ionic group, an amide structure, and an alkyleneoxy structure.

4. The silicone hydrogel according to claim 3, wherein the hydrophilic monomer (B) comprises at least one selected from N-vinyl-2-pyrrolidone or N,N-dimethylacrylamide.

5. The silicone hydrogel according to claim 2, wherein the surfactant (C) comprises a non-polymerizable surfactant.

6. The silicone hydrogel according to claim 2, wherein the surfactant (C) comprises a sugar-based surfactant.

7. The silicone hydrogel according to claim 6, wherein the sugar-based surfactant comprises a sugar fatty acid ester.

8. The silicone hydrogel according to claim 1, wherein the silicone hydrogel has a monolayer structure in which differences in O/Si concentration ratio between adjacent measurement points among the first measurement point

to the 16th measurement point are all 10 or less.

**9.** A contact lens comprising the silicone hydrogel according to any one of claims 1 to 8.

**10.** A method for producing the silicone hydrogel according to claim 1, the method comprising (1), (2), and (4), and optionally (3):

(1): preparing a curable composition containing a silicone-based (meth)acrylate (A), a hydrophilic monomer (B), and at least one surfactant (C);
(2): molding the curable composition prepared in (1) using a hydrophobic mold to produce a cured product;
(3): swelling the cured product produced in (2) using water;
(4): washing the silicone hydrogel produced in (3).

**11.** The production method according to claim 10, wherein the at least one surfactant (C) comprises a non-polymerizable surfactant.

**12.** The production method according to claim 10, wherein the at least one surfactant (C) comprises a sugar-based surfactant.

**13.** The production method according to claim 12, wherein the sugar-based surfactant comprises a sugar fatty acid ester.

**14.** The production method according to claim 10, wherein the hydrophobic mold is a polyolefin mold.

**15.** The production method according to claim 10, wherein the silicone hydrogel is not subjected to a plasma treatment.

**16.** A method for producing a contact lens containing the silicone hydrogel described in claim 1, the method comprising producing the silicone hydrogel by the production method according to any one of claims 10 to 15.

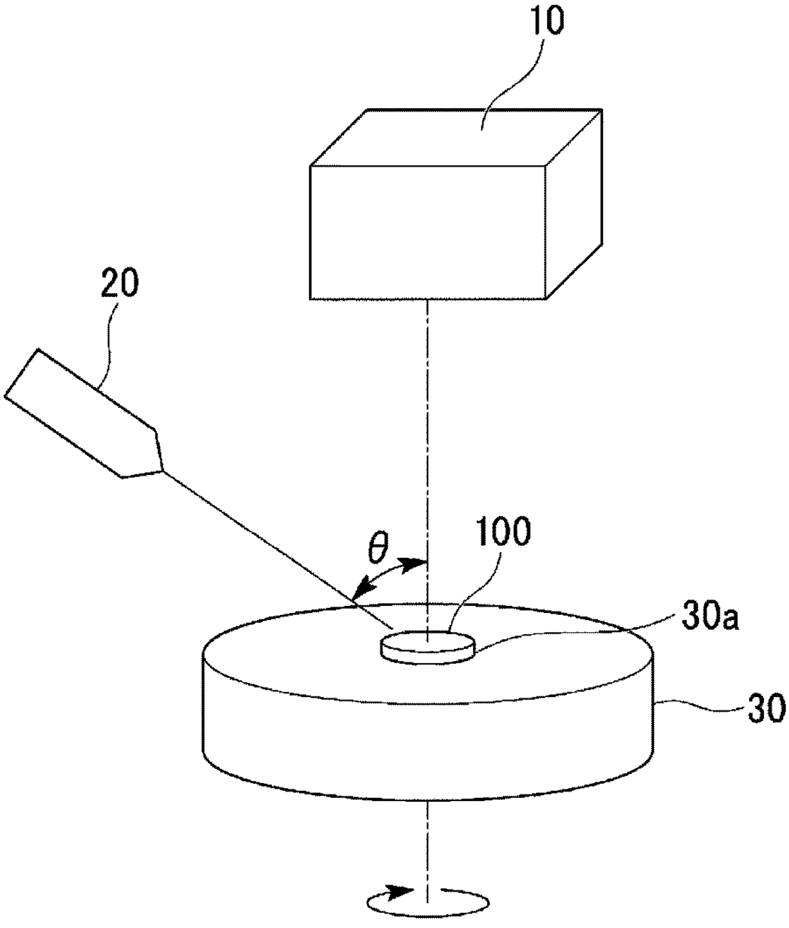


FIG. 1

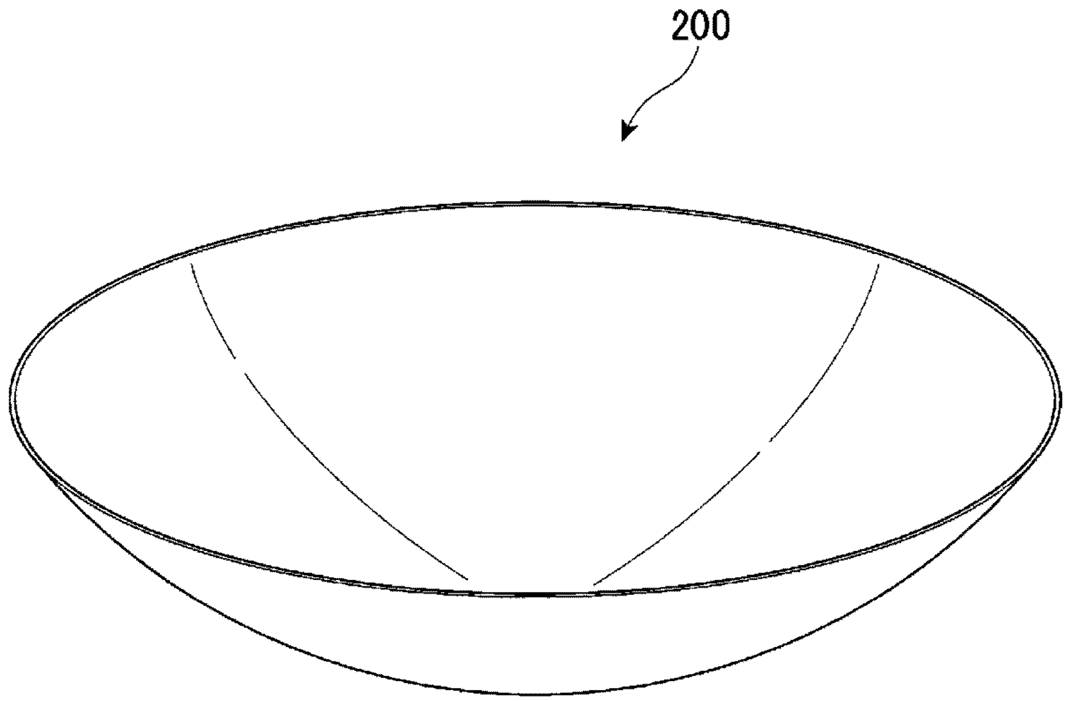


FIG. 2

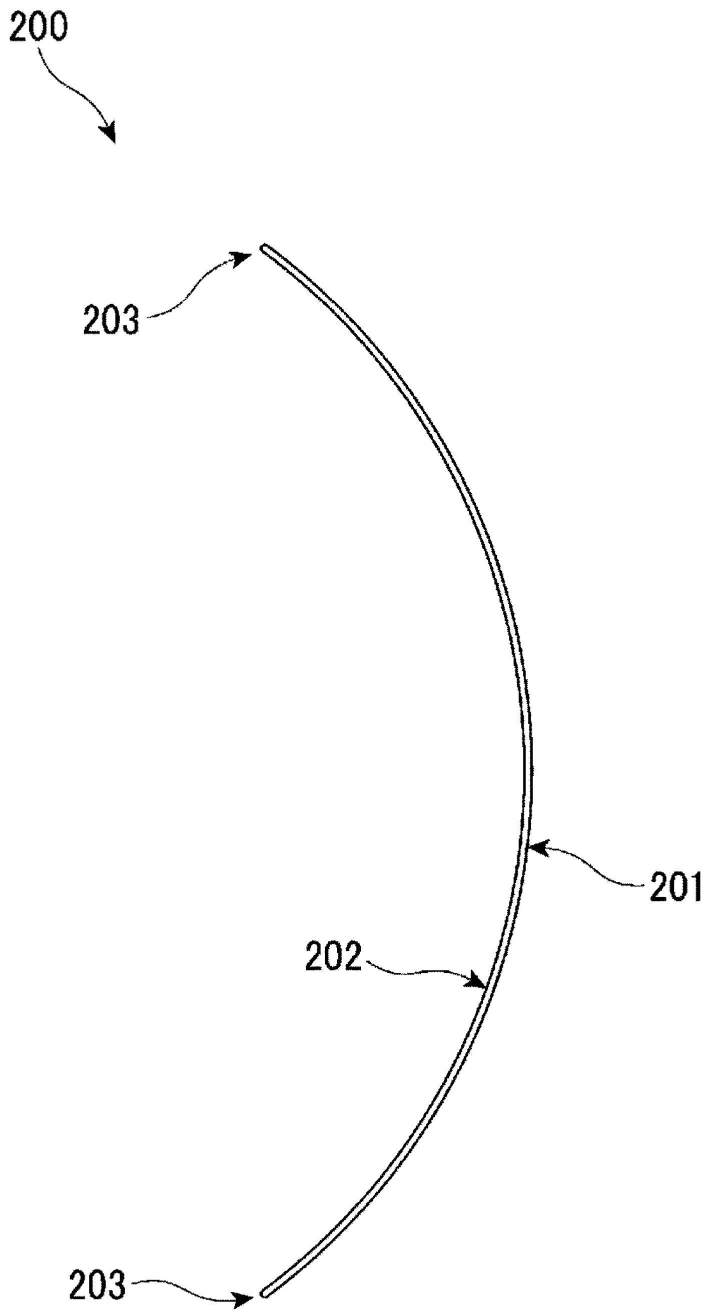


FIG. 3

## INTERNATIONAL SEARCH REPORT

International application No. **PCT/JP2024/024223**

**A. CLASSIFICATION OF SUBJECT MATTER**

***C08J 3/075***(2006.01)i; ***A61L 27/16***(2006.01)i; ***A61L 27/52***(2006.01)i; ***C08F 290/06***(2006.01)i; ***G02C 7/04***(2006.01)i
FI: C08J3/075 CEY; C08F290/06; A61L27/16; A61L27/52; G02C7/04

According to International Patent Classification (IPC) or to both national classification and IPC

**B. FIELDS SEARCHED**

Minimum documentation searched (classification system followed by classification symbols)

A61L27/16; A61L27/52; C08F290/00-290/14; C08F299/00-299/08; C08J3/00-3/28; G02C7/04

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2001-233922 A (BAUSCH & LOMB INCORPORATED) 28 August 2001 (2001-08-28) entire text | 1-16 |
| A | JP 2017-6621 A (BENQ MATERIALS CORP.) 12 January 2017 (2017-01-12) entire text | 1-16 |
| A | JP 2011-219512 A (MENICON CO., LTD.) 04 November 2011 (2011-11-04) entire text | 1-16 |
| A | WO 2017/018425 A1 (JSR CORPORATION) 02 February 2017 (2017-02-02) entire text | 1-16 |
| A | WO 2015/001811 A1 (HOYA CORPORATION) 08 January 2015 (2015-01-08) entire text | 1-16 |
| P, A | WO 2024/135813 A1 (MITSUBISHI CHEMICAL CORPORATION) 27 June 2024 (2024-06-27) entire text | 1-16 |

☐ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **10 September 2024** | **24 September 2024** |
| Name and mailing address of the ISA/JP<br>**Japan Patent Office (ISA/JP)**<br>**3-4-3 Kasumigaseki, Chiyoda-ku, Tokyo 100-8915**<br>**Japan** | Authorized officer<br><br>Telephone No. |

Form PCT/ISA/210 (second sheet) (July 2022)

**INTERNATIONAL SEARCH REPORT**
**Information on patent family members**

International application No.
**PCT/JP2024/024223**

| Patent document cited in search report | Publication date (day/month/year) | Patent family member(s) | Publication date (day/month/year) |
|---|---|---|---|
| JP 2001-233922 A | 28 August 2001 | US 5177165 A<br>entire text<br>WO 1992/009639 A2<br>EP 559784 A1<br>CN 1061978 A<br>KR 10-1993-0702401 A | |
| JP 2017-6621 A | 12 January 2017 | US 2016/0370504 A1<br>entire text<br>EP 3106903 A1<br>CN 106256841 A | |
| JP 2011-219512 A | 04 November 2011 | (Family: none) | |
| WO 2017/018425 A1 | 02 February 2017 | US 2018/0217294 A1<br>entire text<br>EP 3329943 A1<br>CN 107249652 A | |
| WO 2015/001811 A1 | 08 January 2015 | US 2016/0282516 A1<br>entire text<br>EP 2845708 A1<br>CN 104602886 A<br>KR 10-2015-0067085 A | |
| WO 2024/135813 A1 | 27 June 2024 | (Family: none) | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2023110075 A
- JP 2024050042 A
- JP 58216222 A
- JP 61069023 A
- JP H06503373 T
- JP 2014040598 A